# EUROPEAN PATENT APPLICATION

(11) **EP 4 835 909 A1**
(43) Date of publication of application: **04.11.2026**
(21) Application number: 24911816.7
(22) Date of filing: 04.07.2024
(51) Int. Cl.: G21B 3/00, H05H 1/24

(54) **NUCLEAR FUSION REACTION GENERATION DEVICE, PLASMA GENERATION DEVICE, NUCLEAR FUSION REACTION GENERATION METHOD, AND PLASMA GENERATION METHOD**

(30) Priority: 28.12.2023 JP 2023223510
(71) Applicant: Kato, Kiyoshi, Fujisawa-shi, Kanagawa 251-0042 (JP)
(72) Inventor: Kato, Kiyoshi, Fujisawa-shi, Kanagawa 251-0042 (JP)
(74) Representative: Hautier IP - MC/EP
(86) International application number: PCT/JP2024/024232
(87) International publication number: WO 2025/141917

(57) **Abstract**

A nuclear fusion reaction generating device (1) includes: at least one pair of electrodes (3, 3) configured to provide a potential difference to an insulating liquid containing heavy water; a DC power supply (5) connected to the pair of electrodes (3, 3); and a plurality of electroconductive carbon nanotubes (4) dispersed in the liquid. Each carbon nanotube (4) is about 10 nm in diameter and about 3 mm in length. The distance between the electrodes (3, 3) is 1 cm. The potential difference of the electrodes (3, 3) is 100 kV.

## Description

### [Technical Field]

The present disclosure relates to a nuclear fusion reaction generating device, a plasma generating device, a nuclear fusion reaction generating method, and a plasma generating method.

### [Background Art]

The conditions required for nuclear fusion reaction are a high temperature of about 10⁸ K, a sufficient density, and a sufficient confinement time. In general, issues are how to obtain a large amount of energy and power required for such high temperature generation and achieve confinement of the plasma at a generated ultra-high pressure.

When fuel plasma is heated up to 10⁸ K, the pressure, which is proportional to a temperature, will increase. The fuel plasma will expand unless confined, and the reaction rate will decrease (for example, while the temperature does not exceed 10³ K (at most about 5000 K) even in a case of explosives, the temperature reaches as high as 10⁸ K in a case of fusion plasma, which is 10⁵ times 10³ K). At such a high temperature, fuel plasma emits high-energy thermal radiation and rapidly cools. This is because a black body would cause thermal radiation of energy that is proportional to T⁴ according to Stefan-Boltzmann's law. Since such thermal radiation will be particularly intense at a high temperature, even in a case of the sun having a core temperature of 16 million K, the temperature near the surface, which can be considered as a black body, decreases to as low as about 6000 K. In a case of 10⁸ K, energy of 10¹⁶ times or greater of the sun surface per unit area is emitted, which is not practical. In general, however, while the thermal radiation does not reach such a high intensity because of a small optical depth of plasma on the ground, the plasma emits thermal radiation corresponding to a temperature (X-ray at a high temperature) and then rapidly cools. Thus, it is not possible to take much time for the heating, and it is necessary to reduce the optical depth of the plasma as much as possible.

To heat 1 g of heavy water fuel to 10⁸ K in 1 second, energy and power of about 10⁹ J or less and about 10⁹ W or less are required, but this is not feasible. If DC power were used, the power would not be enough even with Sakuma Frequency Conversion Station, which is the most powerful DC power supply in Japan. Although it is possible to achieve such power by using a pulsed power supply, it is difficult to reach the amount of energy described above. In addition, with a practical energy multiplication factor, the output would be substantially the same as a typical bomb at the maximum output. Thus, a method of intensively heating a small amount of fuel is essential for nuclear fusion ignition.

To maintain the density to proceed with a nuclear fusion reaction, some confinement system is required. In some systems, it is required to easily compress both a liquid and a solid and confine plasma at such a pressure at which even ceramics acts as a liquid. As the confinement systems, various magnetic confinement and inertial confinement have been studied.

In the magnetic confinement, diluted plasma (having a density at which the plasma can be confined by a magnetic field) in vacuum is heated, and thereby a small amount of fuel is intensively heated.

To heat plasma up to 10⁸ K, it is sufficient to reduce the potential difference by about 10 kV. However, the plasma is diluted and thus is required to be confined for a relatively long time.

While plasma is basically treated as a particle bundle, actual plasma is of a many-body system, which is a fluid (the behavior thereof is chaotic). Thus, currently, it is not possible to confine plasma as intended.

Further, it is difficult to reheat the plasma confined in a space. It is difficult to efficiently and stably generate high-power neutral particle beams or resonant microwaves that are commonly used.

In the inertial confinement system, a small fuel pellet is irradiated with high-energy laser from all directions, and thereby a small amount of fuel is intensively heated.

The outer shell heated at a high temperature rapidly expands, thereby the fuel center is compressed to a high pressure as high as 10 TPa (implosion) and heated to 10⁸ K by adiabatic compression, and a nuclear fusion reaction is then reached. Since the confinement is due to inertia of the small amount of fuel by itself, the entire process has to be completed within an extremely short time.

However, it is difficult to uniformly heat and compress a fuel pellet. This is because fluid dynamic instability inherently makes it difficult to ensure the uniformity. In such a system, since it is required not only to confine fuel but also to positively compress the fuel, there also is a problem of fast development of instability and tendency of a fuel pellet shell to rupture.

Further, when laser is used for ignition, there is a problem of low conversion efficiency from electrical power into laser. What is required is not to merely generate laser but to pack high energy in an extremely short time by using chirped pulse compression or the like, and this makes the energy efficiency inevitably lower.

To sustain a continuous reaction, it is required to overcome various challenges (the lifetime of a laser oscillator, the effect caused by substances accumulating in a reactor, or the like), though it is not a problem for a single-shot of laser.

Further, a problem common to conventional confinement systems is that a reactor wall is damaged when directly irradiated with neutron beams or X-rays. It is thus necessary to take measures for suitable heat removal or against embrittlement and radioactivation. This may lead to a particularly sensitive problem with a system using a superconducting magnet or the like (for example, heating of a coolant by a neutron beam is the problem), and use of a blanket will result in increased maintenance costs due to replacement, increased low-level radioactive waste, and irreversible consumption of relatively rare resources such as lithium due to nuclear modification.

There also is a problem of difficulty in procurement and handling of tritium. Since the least stringent reaction condition for nuclear fusion is applied to a D-T reaction, it is required to handle a relatively large amount of tritium, which is rare and is a radioactive substance.

Patent Literature 1 discloses that 1000 carbon nanotubes having a length of about 3 mm are connected parallel between electrodes, pulsed voltages are applied thereto, and nuclear transmutation is performed inside a system in which the carbon nanotubes are confined.

### [Citation List]

### [Patent Literature]

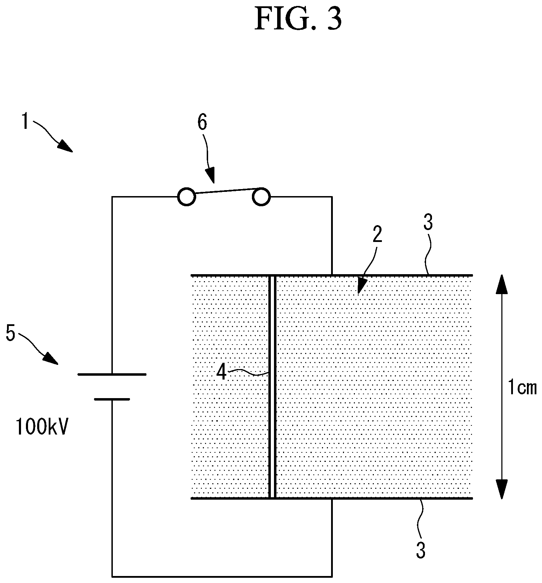

[PTL 1]
Japanese Patent Application Laid-Open No. 2009-518646 (Fig. 3 and so on)

### [Summary of Invention]

### [Technical Problem]

In Patent Literature 1, however, a pulsed voltage of 200 V is applied to 1000 carbon nanotubes having 200 Ω as a whole at a frequency of 10 kHz for 200 nanoseconds (paragraph [0070]), 200 W by 200 nanoseconds, that is, 40000 nanojoules are divided by 1000 carbon nanotubes, and thereby 40 nanojoules are applied per a single pulse and a single carbon nanotube. Since the weight of a single nanotube is on the order of 10⁻¹² g, this results in 40000 J per 1 g. Since the specific heat of graphite is about 2 J/g*K, the calculated temperature rise is on the order of 10000 K as a result. In addition, given heat dissipation to the surroundings during heating, the effect of pulse shape, or the like, the temperature is expected to remain at a temperature not exceeding 4000 K. Since the pulsed voltage is at 10 kHz, there is a non-application period of about 100 microseconds. It is thus considered that the system is designed such that the carbon nanotubes are cooled in the non-application period, heat-shielding layers are collapsed or the like, and destruction of the carbon nanotubes is not reached as a whole.

As discussed above, in Patent Literature 1, it is considered that the temperature remains at a reached temperature not exceeding 4000 K, and it is not possible to achieve a high temperature of about 10⁸ K required for a nuclear fusion reaction.

The present disclosure has been made in view of such circumstances and intends to provide a nuclear fusion reaction generating device, a plasma generating device, a nuclear fusion reaction generating method, and a plasma generating method that can achieve a high temperature of about 10⁸ K.

### [Solution to Problem]

The nuclear fusion reaction generating device according to one aspect of the present disclosure includes: at least one pair of electrodes configured to provide a potential difference to an insulating medium containing nuclear fusion fuel; a power supply connected to the pair of electrodes; and a plurality of electroconductive nanostructured materials dispersed in the medium, each of the nanostructured materials has a diameter of 1 nm or greater and 100 nm or less and a length of 0.5 mm or greater and 100 mm or less, the distance between the electrodes is 1 mm or greater and 100 mm or less, and the potential difference is 10 kV or greater and 1000 kV or less.

When a pair of electrodes are powered from a power supply and a potential difference is provided between the pair of electrodes, at least one electroconductive path is formed from one electrode to the other electrode in the plurality of nanostructured materials dispersed in the medium. Since the distance between the electrodes is 1 mm or greater and 100 mm or less and the potential difference is 10 kV or greater and 1000 kV or less, sufficient energy to generate plasma is provided to the formed electroconductive path. This enables the electroconductive path formed by the nanostructured material to form plasma filaments and generate plasma. Accordingly, a high temperature of about 10⁸ K can be achieved. Further, since the nuclear fusion fuel (for example, heavy water, tritium, deuterium carbide, or the like) is contained in the medium, this can be used as fuel for nuclear fusion reactions and thus can generate a nuclear fusion reaction.

As the nanostructured material, for example, nanotubes such as carbon nanotubes, nanowires such as copper nanowires, nano-coils, graphene nanoribbons, conductive polymers, or the like can be used.

Each nanostructured material preferably has an elongated shape having an end.

The plasma generating device according to one aspect of the present disclosure includes: at least one pair of electrodes configured to provide a potential difference to an insulating medium; a power supply connected to the pair of electrodes; and a plurality of electroconductive nanostructured materials dispersed in the medium, each of the nanostructured materials has a diameter of 1 nm or greater and 100 nm or less and a length of 0.5 mm or greater and 100 mm or less, the distance between the electrodes is 1 mm or greater and 100 mm or less, and the potential difference is 10 kV or greater and 1000 kV or less.

When a pair of electrodes are powered by a power supply and a potential difference is provided therebetween, at least one electroconductive path is formed from one electrode to the other electrode in the plurality of nanostructured materials dispersed in the medium. Since the distance between the electrodes is 1 mm or greater and 100 mm or less and the potential difference is 10 kV or greater and 1000 kV or less, sufficient energy to generate plasma is provided to the formed electroconductive path. This enables the electroconductive path formed by the nanostructured material to form plasma filaments and generate plasma. Accordingly, a high temperature of about 10⁸ K can be achieved.

As the nanostructured material, for example, nanotubes such as carbon nanotubes, nanowires such as copper nanowires, nano-coils, graphene nanoribbons, conductive polymers, or the like can be used.

Each nanostructured material preferably has an elongated shape having an end.

The nuclear fusion reaction generating method according to one aspect of the present disclosure is a nuclear fusion reaction generating method performed by using at least one pair of electrodes configured to provide a potential difference to an insulating medium containing nuclear fusion fuel, a power supply connected to the pair of electrodes, and a plurality of electroconductive nanostructured materials dispersed in the medium, each of the nanostructured materials has a diameter of 1 nm or greater and 100 nm or less and a length of 0.5 mm or greater and 100 mm or less, the distance between the electrodes is 1 mm or greater and 100 mm or less, and the potential difference is 10 kV or greater and 1000 kV or less.

The plasma generating method according to one aspect of the present disclosure is a plasma generating method performed by using at least one pair of electrodes configured to provide a potential difference to an insulating medium, a power supply connected to the pair of electrodes, and a plurality of electroconductive nanostructured materials dispersed in the medium, each of the nanostructured materials has a diameter of 1 nm or greater and 100 nm or less and a length of 0.5 mm or greater and 100 mm or less, the distance between the electrodes is 1 mm or greater and 100 mm or less, and the potential difference is 10 kV or greater and 1000 kV or less.

### [Advantageous Effects of Invention]

A high temperature of about 10⁸ K can be achieved.

### [Brief Description of Drawings]

[Fig. 1]

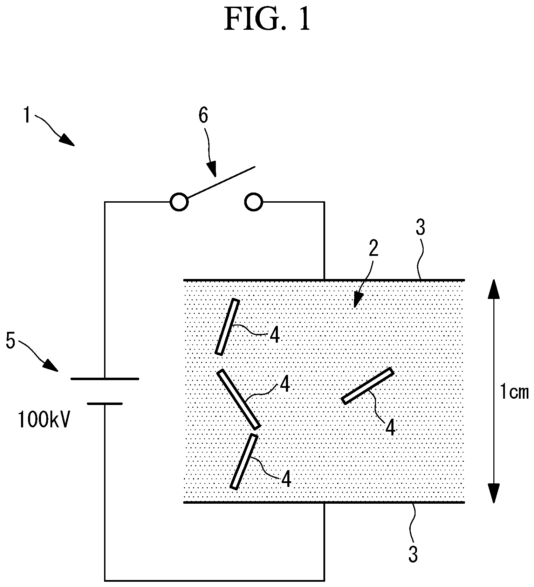

   Fig. 1 is a general configuration diagram illustrating a nuclear fusion reaction generating device according to Example 1 of one embodiment of the present disclosure.
[Fig. 2]

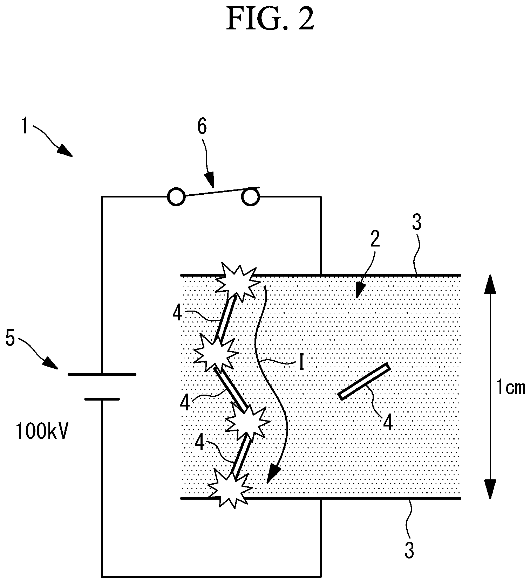

   Fig. 2 is a general configuration diagram corresponding to Fig. 1 and illustrating the state where a switch is turned on.
[Fig. 3]
   Fig. 3 is a diagram illustrating a calculation model of Fig. 1 and Fig. 2.
[Fig. 4]

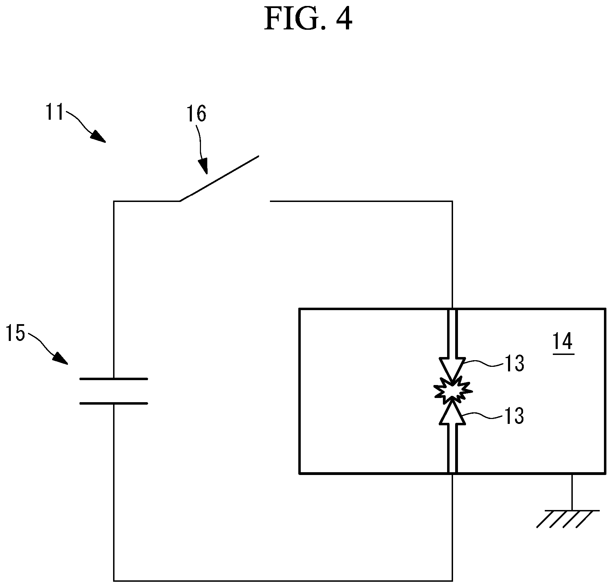

   Fig. 4 is a general configuration diagram illustrating an experimental device of Example 2.
[Fig. 5]

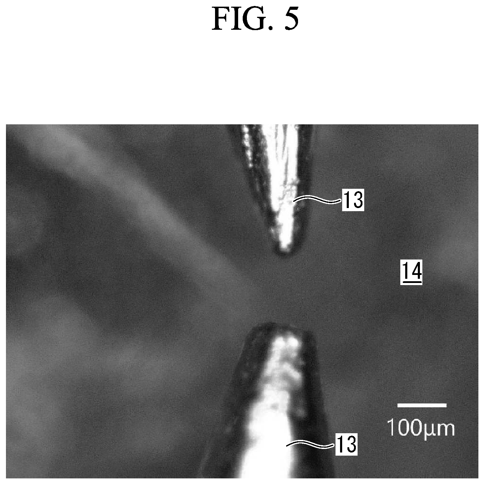

   Fig. 5 is a photograph illustrating needle electrodes of Fig. 4.
[Fig. 6]

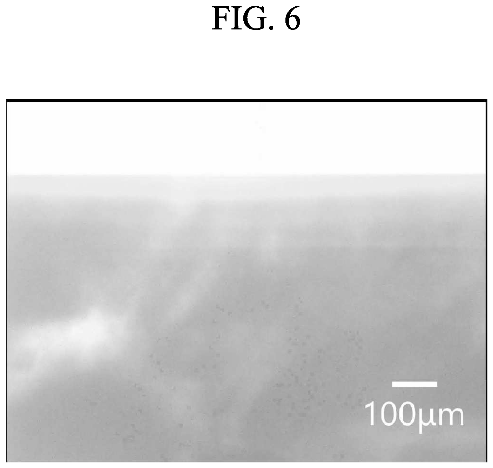

   Fig. 6 is a photograph illustrating a light emission of plasma.
[Fig. 7]

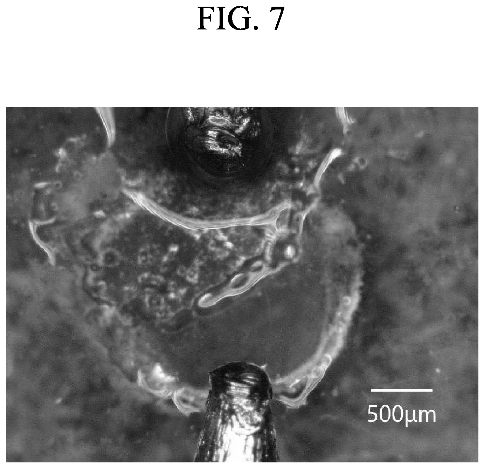

   Fig. 7 is a photograph illustrating a state where metal components are scattered around the needle electrodes after a plasma light emission.
[Fig. 8]

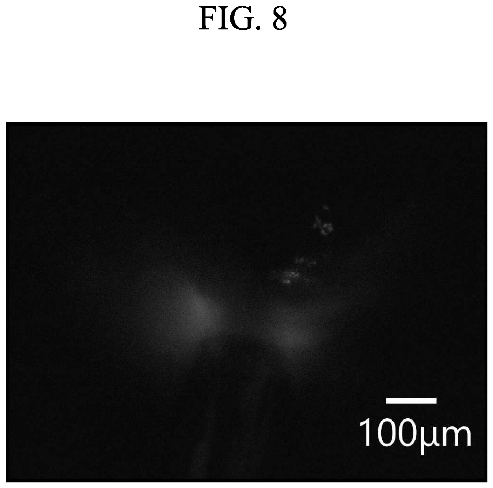

   Fig. 8 is a photograph illustrating a light emission from silver nanowires.
[Fig. 9]

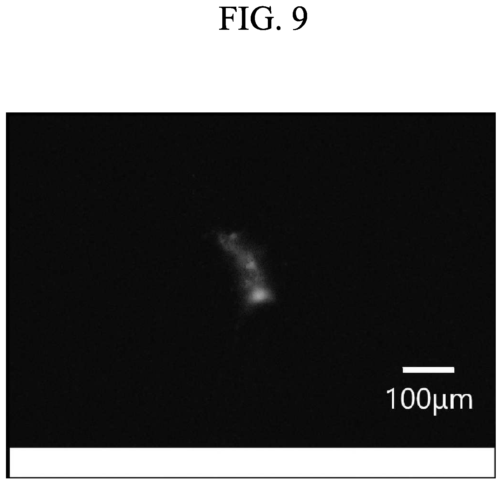

   Fig. 9 is a photograph illustrating a light emission from carbon nanotubes.

### [Description of Embodiments]

One embodiment according to the present disclosure will be described below.

A nuclear fusion reaction generating device according to the present embodiment minimizes the amount and spatial size of fuel to be heated as much as possible at a time of ignition. Accordingly, by heating the fuel that is quantitatively and spatially only about 10⁻⁶ times that of inertial nuclear fusion, it is possible to achieve rapid heating at a feasible power.

A degree of high voltage that does not cause overall dielectric breakdown is applied to an insulating liquid (medium) as nuclear fusion fuel (for example, heavy water, tritium, deuterium carbide, or the like: hereafter, simply referred to as "fuel") in which conductive fine elongated nanostructured materials (typically, having about several 10 nm in diameter) are dispersed. As the nanostructured material, for example, nanotubes such as carbon nanotubes, nanowires such as copper nanowires, nano-coils, graphene nanoribbons, conductive polymers, or the like can be used. Each nanostructured material has an elongated shape having ends at both sides in the longitudinal direction, and the ratio of the length relative to the diameter is, for example, 1000 or greater.

Current flows in the nanostructured material due to partial dielectric breakdown. As long as a sufficiently high potential gradient is applied thereto, the current continues to flow due to the self-inductance even at a temperature that typically causes the nanostructured material to break, and fine plasma filaments are generated in the fuel due to phase transition. Since plasma is a good conductor, current is conducted thereto to heat the plasma (an energy concentration method similar to Joule heating or heating of light bulb filaments or electrically heated wires), and positive ions are lowered along the electromagnetic potential to the negative electrode side for the heating.

Note that, in nuclear fusion, Sandia National Laboratories in U. S. has conducted an experiment to apply a high voltage to metal wires (having about 0.1 mm in diameter) by a Z-machine to form plasma. In contrast, in the present embodiment, significantly thin plasma filaments each having about 10⁻³ times in diameter and about 10⁻⁶ times in sectional area relative to the metal wires are generated. Although it is conceivable that the plasma is rapidly diffused because of a high pressure due to a rise in temperature and the heat thereof is rapidly diffused because of contact with a liquid, the plasma can continue to exist as with in-liquid plasma.

The plasma filament is subjected to the following selectivity.

### (1) Selectivity of electroconductivity

While plasma is a good conductor, surrounding non-ionized fuel is an insulator. Thus, only the plasma portion is selectively subjected to Joule heating.

### (2) Selectivity of confinement

The plasma portion is confined by a magnetic field generated by the Ampère's law when current flows therethrough (magnetic field confinement, Z-pinch). In contrast, since no confinement force acts on non-ionized fuel, fuel that has been heated to have a high pressure but has not been ionized separates the plasma and the surrounding fuel from each other, and the heat of the plasma is less likely to be diffused to the surroundings (for example, film boiling or burnout). Further, the small surface area of the plasma is one of the factors that delay heat diffusion.

Only small energy is required to heat the plasma filaments up to a temperature at which fusion plasma as described above is generated. This is because the substance amount contained in the plasma filaments is small. Even if the surrounding fuel is taken during the heating and thereby plasma filaments each having a thickness of 100 nm (= 10⁻⁵ cm) and a length of 1 cm are formed, the substance amount thereof is only about 10⁻¹⁰ g.

For the confinement force applied to plasma, the radiation pressure caused by thermal radiation will also be important in particular at a high temperature. This is because the radiation pressure proportional to a radiation energy density is larger than that in the conventional method due to a smaller surface area of plasma.

However, an ionized region and a non-ionized region are not distinctly separated. Since individual particles have different velocities in accordance with the Maxwell distribution at a certain temperature, ionized particles and non-ionized particles coexist at approximately 5000 K to 20000 K (Sah's ionization formula). Since the degree of ionization determines electrical resistance, a region where current less flows occurs, as the region is closer to the periphery. This region is also subjected to Joule heating. However, since a Lorentz force acts on the ionized particles so as to be drawn into the plasma filaments, only the particles having high energy are extracted in the peripheral region, thereby this peripheral region is cooled, and heat dissipation is thus prevented. Consequently, a stronger confinement force acts on partially ionized atoms, such as carbon and oxygen, for a higher temperature and a higher degree of ionization (when the partially ionized atoms are fully ionized, substantially the same confinement force acts on these atoms as in the case of deuterium).

The surrounding fuel is heated by the plasma filaments, and a temperature gradient is created. Since a pressure gradient occurs when a temperature gradient is created at a constant density, a flow of particles occurs in a direction away from the plasma filaments. Thus, the surrounding cold fuel is less likely to go against such a flow and affect the plasma filaments. When a pressure equilibrium is established as a result of the flow, the particle density will be inversely proportional to the temperature.

Although a confinement force acts on the plasma filaments, it is generally difficult to stably confine these plasma filaments for a long time. The plasma filaments grow into complex shapes because of fluid dynamic instability such as kink instability, a large fluctuation inherent to the mesoscopic domain, or the like. Further, an excessively long time of heating causes the plasma filaments to incorporate surrounding fuel and grow thick, and larger current flows therein and increases the load of the power supply. It is therefore preferable to perform the heating at a relatively high rate in order to reduce radiation losses.

Since the heat generation rate of the plasma filaments is determined by the slope of a potential gradient, a higher heat generation rate can be achieved as long as the distance between the electrodes is small even when the absolute applied voltage is not high (for example, an energy concentration method similar to that in a case of a spark plug). In the present embodiment, when the voltage is 100 kV by using a readily available DC power supply and the distance between the electrodes is 1 cm, this results in 10 MV/m close to the dielectric strength of water. Further, under such conditions, when deuterium ions move by several millimeters to the negative electrode side, sufficient energy to initiate a nuclear fusion reaction is provided. In a case of carbon ions or oxygen ions, sufficient energy is provided by an even shorter moving distance.

The plasma filaments having instability may favorably affect nuclear fusion ignition. Since nanotubes or nanowires have large L/D ratios (aspect ratios), plasma with various shapes and conditions is generated due to the instability over the entire length of the plasma filaments. This reduces the probability where no spontaneously igniting plasma is generated at any place when current stops flowing, and generation of spontaneous plasma at a high probability is expected.

Since the heated substance amount is small, practical use is not expected if only the heated fuel contributes to a nuclear fusion reaction. Sufficient heating of the plasma filaments allows a spontaneous ignition region (a region in which energy generated inside due to nuclear fusion is larger than energy dissipated outside due to radiation or the like) to occur at a certain probability even after the current is turned off. Once a spontaneous ignition region occurs, this spontaneous ignition region is surrounded by fuel at a liquid density and thus starts expanding due to mainly alpha rays from fusion plasma. This expansion continues until the surrounding fuel is blown off and a sufficient pressure reduction is obtained (inertial confinement). Since the plasma generated by the heating is at an extremely high pressure and the surrounding cold fuel has a mass that is orders of magnitude greater, the plasma is not easily depressurized. This condition is similar to detonation of explosives.

In contrast, in the present embodiment, there is no strong restriction on arranging an object around fuel (unlike laser nuclear fusion or the like). Thus, a tamper such as that intended to delay depressurization to extend the duration of a nuclear fusion reaction can be arranged around fuel. The tamper is heated by a neutron beam or the like, plasma is compressed by a reaction force scattering into the surroundings, and thereby a time until the plasma is depressurized can be extended.

The tamper serves to confine fusion plasma by inertia, absorb neutron beams or X-rays emitted from fusion plasma and protect a furnace wall, and act as a buffer that converts an extremely high temperature of fusion plasma into a temperature that is manageable for power generation. Thus, the tamper is preferably a fluid that absorbs neutron beams or X-rays (for example, a combination of molten metal and water, water in which heavy metal components are dispersed, or the like).

With respect to the density of fuel, a large density of fuel increases heat dissipation during heating but can favorably increase inertia acting after the heating. In contrast, a low density of fuel can reduce heat dissipation during heating but can undesirably reduce inertia acting after the heating. When a measure such as to cause the fuel to be a supercritical fluid is taken, the density of the fuel can be controlled in any manner from a state where nanostructured materials are dispersed at a density above the liquid density to a state where nanostructured materials float at a lower density than the atmosphere. Thus, the density can be adjusted to meet the purpose before ignition. The fuel density may be changed during heating. For example, a measure such as to initially start current conduction heating in a water vapor atmosphere and then merge cold water thereto during the current conduction may be taken.

Note that the waveform of the voltage applied to fuel may be a waveform of DC, AC, or AC biased on DC or otherwise may be a waveform customized for ignition. It is considered that this waveform determines the intake property of fuel into plasma filaments.

By adjusting the dispersion density of nanostructured materials and the contact area of electrodes with fuel, it is possible to adjust the number of simultaneously occurring electroconductive paths. When the number of electroconductive paths is smaller, heating up to a higher temperature is made possible due to energy concentration. When the number of electroconductive paths is larger, since the electroconductive paths are attracted to each other due to a pinch force, the fuel can be more intensively confined. Note that the distance between opposing electrodes may be a dimension that is larger than a single carbon nanotube.

When carbon nanotubes are employed, fuel (deuterium, heavy water, deuterium carbide, or the like) may be contained in the nanotubes in advance, or substituents containing fuel may be bound thereto in advance. Tritium or lithium may be used therefor as an ignition aid. These measures serve as an effective solution in particular when the fuel density is small.

Thin carbon nanotubes of about 10 nm in diameter are easily obtained. Further, carbon nanotubes have advantages of an extremely low absorption of X-rays due to the material and the size thereof, a small optical depth, a low radiation rate due to the Kirchhoff's law, and thus a small radiation loss. On the other hand, metal nanowires have an advantage of being easily heated due to a high charge density.

The ignition conditions may be controlled by a degree of dispersion of nanostructured materials. By intentionally reducing the degree of dispersion and conducting current in a state where a plurality of nanostructured materials are tangled, it is possible to take an ignition strategy to allow wider varieties of plasma-fuel arrangement to emerge.

As the fuel, it is preferable to use liquid deuterium in order to increase the effective density and thus increase the reaction probability. On the other hand, there is an advantage in allowing oxygen ions and carbon ions to coexist by using heavy water or deuterium carbide. First, a high density enables confinement with larger inertia. Further, when ions have been fully ionized, deuterium ions, oxygen ions, and carbon ions will behave electromagnetically in the same manner and move on similar orbits during current conduction because these ions have close specific changes. However, once thermal behavior is started after the current is stopped, the oxygen ions and the carbon ions reach temperatures that are eight times higher and six times higher than the deuterium ions, respectively. Since the diffusion rate is higher for a higher temperature, once released from confinement due to the pinch force, the oxygen ions and the carbon ions are first diffused, the deuterium ions are maintained at the temperature and heated, and thereby a nuclear fusion reaction will be facilitated (the Soret effect also relates thereto).

### [Example 1]

Example 1 of the embodiment described above will be described below with reference to the drawings.

Fig. 1 illustrates the overview of a nuclear fusion reaction generating device 1 according to the present Example. As illustrated in Fig. 1, the nuclear fusion reaction generating device 1 is provided with a pair of electrodes 3, 3 so as to provide a potential difference to a liquid 2 having insulating properties. The electrodes 3, 3 are made of metal, for example, and the distance between the electrodes 3, 3 is 1 cm. The distance between the electrodes 3, 3 is a dimension larger than a single carbon nanotube 4.

A DC power supply (power supply) 5 is electrically connected to each of the electrodes 3, 3 via a switch 6. The DC power supply 5 can apply a voltage of 100 kV to the electrodes 3, 3. Therefore, the intensity of the electric field applied to the liquid 2 is 10 MV/m.

The liquid 2 has insulating properties, which is water containing heavy water. In the liquid 2, a large number of carbon nanotubes 4 are dispersed. Each carbon nanotube 4 has a diameter of about 10 nm and a length of about 3 mm.

The switch 6 is controlled to be turned on and off by a control unit. The control unit is formed of, for example, a central processing unit (CPU), a random access memory (RAM), a read only memory (ROM), a computer readable storage medium, and the like. Further, a series of processes to implement various functions are stored in a storage medium or the like in a form of a program as an example, and when the CPU loads this program into the RAM or the like to perform processing and computation on information, the various functions are implemented. Note that various forms may be applied for a program, such as a form in which the program is installed in advance in the ROM or other storage media, a form in which the program stored in a computer readable storage medium is provided, a form in which the program is delivered via a wired or wireless communication scheme, or the like. The computer readable storage medium is a magnetic disk, a magneto-optical disk, a CD-ROM, a DVD-ROM, a semiconductor memory, or the like.

As illustrated in Fig. 2, once the switch 6 is turned on in response to an instruction from the control unit, a DC voltage is applied between the electrodes 3, 3, and the intensity of an electric field of 10 MV/m is applied to the liquid 2. As illustrated in Fig. 2, since the carbon nanotubes 4 are dispersed in the liquid 2, the ends of the carbon nanotubes 4 are sufficiently close to ends of other nanotubes or the electrodes 3 at a certain probability. Dielectric breakdown then occurs between the ends of the carbon nanotubes 4 or in gaps between the ends of the carbon nanotubes 4 and the electrodes 3, 3, and this causes current I to flow. Since the dielectric strength of pure water is about 60 MV/m, no current flows in the remaining portions. Since the flowing current I is constant everywhere on the electroconductive paths and passes through a narrow region on the order of 10 nm in diameter in the portions of the carbon nanotubes 4, the current density is high therein, and this results in a high energy density and a high magnetic intensity.

Fig. 3 illustrates a calculation model simplified from Fig. 1 and Fig. 2.

To simplify calculation, a model in which a plurality of carbon nanotubes 4 are coupled in series between the electrodes 3, 3 is considered.

The volume of the series of carbon nanotubes is 1 x 10⁻⁶ x 10⁻⁶ = 10⁻¹² (cm³). As a reference, the volume of a light bulb filament is 1 x 10⁻² x 10⁻² = 10⁻⁴ (cm³). When the same power is introduced if the particle densities are substantially the same in the carbon nanotube and the light bulb filament (there is no significant difference in solid particle densities), the energy taken by a single particle of the carbon nanotube is 10⁸ times that of the light bulb filament, and this enables high-rate heating.

If the carbon nanotube has substantially the same density as the graphite, the mass of the carbon nanotube of 10⁻¹² cm³ is 2.2 x 10⁻¹² g. Since the specific heat of plasma at a constant pressure is about 100 J/g x K at 20000 K (the value from a reference: https://www.jstage.jst.go.jp/article/jjtp1987/4/1/4_1_3/_pdf/-char/ja, Fig. 6), the energy required to heat this carbon nanotube up to 10⁸ K is on the order of 10⁻² J. Therefore, with a voltage of 100 kV, such energy can be fully introduced.

Next, consideration is made on what factors exist if the heating up to 10⁸ K is not possible even with the nuclear fusion reaction generating device according to the present embodiment.

It is conceivable that the current would be interrupted during the heating, in particular, during a phase in which nanotubes have evaporated. However, it can be said that current is not interrupted by the self-inductance. Further, an example in which carbon steam does not prevent electric conduction is the carbon arc lamp.

It is conceivable that the thickness of generated plasma would increase abruptly and the power supply capacity would be exceeded before sufficient energy is introduced. However, there is no chance of the plasma becoming thicker and thus causing the power supply capacity to be exceeded, because heat is less likely to be transferred due to the small surface area of plasma and because a heat-shielding layer is formed by a non-ionized gas. The phenomenon in which the thickness of plasma abruptly increases has not been confirmed even for the actual in-liquid plasma.

### [Example 2]

Next, an experimental example will be illustrated as Example 2 according to the present embodiment.

The goal of this experimental example is to confirm that plasma is generated in water when a strong electric field is applied to a liquid in which nanostructured materials such as carbon nanotubes or silver nanowires are dispersed in water.

It was confirmed from the following experiment results that plasma is generated in water for both the carbon nanotube dispersion liquid and the silver nanowire dispersion liquid.

Fig. 4 illustrates a general configuration of an experimental device 11. This is essentially based on the calculation model illustrated in Fig. 3. As illustrated in Fig. 5, to generate a strong electric field by using voltages that can be simply and safely handled, two needle electrodes 13 close to each other are used. Each needle electrode 13 is submerged in a dispersion liquid 14 containing nanostructured materials. The needle electrodes 13 are connected to a power supply 15 via a switch 16.

As the dispersion liquid 14, a carbon nanotube dispersion liquid in which carbon nanotubes are dispersed in water and a silver nanowire dispersion liquid in which silver nanowires are dispersed in water were used.

As the carbon nanotubes, TDW0001 (length: less than 100 µm, diameter: 10 to 40 nm) obtained from Hamamatsu Carbonics Corporation was used.

As the silver nanowires, NovaWire-Ag-CI-A30 (length: 30 µm, diameter: 30 nm) obtained from Novarials Corporation was used.

As the microscope camera for observation, L-KIT810 (CMOS sensor of spatial resolution: 1 µm or less) from HOZAN CO., LTD. was used.

As the power supply 15, PMX35-3A (voltage precision: ±3 mV) from Kikusui Electronics Corp. was used for the primary power supply device, and a charge-pump device (output electrostatic capacity: 1000 µF) formed of 10 capacitors connected in series ready for output was used for the secondary power supply device. As the AC power supply device, H2.5TC1A41 (mercury-vapor lamp ballast rated 210 V) from IWASAKI ELECTRIC CO., LTD. was used.

The experimental device 11 described above was used to perform the following experiment.

A phenomenon was observed in which plasma was generated in the dispersion liquid 14 between the needle electrodes 13 by a sufficient strong electric field (approximately 2 MV/m with the applied voltage of about 200V), the tips of the needle electrodes were also turned into plasma, and the plasma was scattered with a flash of light (Fig. 6 and Fig. 7). These photographs represent phenomena that occurred because the current increased uncontrollably due to the negative resistance of the plasma and continued to flow until the current was restricted to the energy amount stored in the charge-pump device. Further, it was confirmed that plasma was generated in the carbon nanotube dispersion liquid and the silver nanowire dispersion liquid under the similar conditions, but no plasma was generated in a mere tap water not containing the same. Note that, while a warm-colored flash of light due to plasma was observed, it was inferred that this flash of light has an extremely high intensity and thus a low color temperature and is light not derived from plasmolyzed nanostructures but derived from plasmolyzed stainless steel of the needle electrodes. It was nevertheless demonstrated that mere current conduction to a conductor in water enables plasma to be generated in the water. Since molten and scattered metal components are viewed around the electrodes (Fig. 7), it is found that plasma above a temperature at which at least stainless steel of the electrodes evaporates in water (above near the boiling point of iron, 3134 K) occurred.

Next, it was attempted to directly observe plasmolyzed nanostructured materials. However, a result of approximation revealed that thermal radiation of visible light emitted from nano-sized plasma is so weak that the observation is not expected to be feasible. It was believed that some luminescence is required for direct observation of plasma. Herein, without requiring any particular alteration for light emissions, the current was limited by a choke coil (470 µH) for the silver nanowire dispersion liquid, the concentration of the dispersion liquid 14 was adjusted, and thereby a blue light emission, which is believed to be derived from nano-sized plasma, was observed (Fig. 8). Also for the carbon nanotube dispersion liquid, the current was limited by the choke coil, and thereby a white light emission, which is believed to be derived from nano-sized plasma, was observed (Fig. 9).

Further, plasma generation with the use of AC was attempted in order to enable observation of nano-sized plasma multiple times in a quasi-steady manner, which can be observed only once with the use of DC. The mercury-vapor lamp ballast (rated 210V) described above was used as the power supply 15, a current limiting resistor (10 kΩ) was used to prevent the current from being uncontrollable, and it was thereby confirmed that plasma is generated in a quasi-steady manner for both cases of the silver nanowires and the carbon nanotubes. Further, a phenomenon was confirmed in which the generation of characteristic plasma gradually ceases over time for both the nanostructured materials. This is believed to be because the nanostructured materials that have once been plasmolyzed is cooled and quenched near the voltage zero-cross point, the carbon nanotubes and the silver nanowires are destroyed over time, and the generation of plasma has ceased when the carbon nanotubes and the silver nanowires are sufficiently reduced in quantity.

The following considerations are made based on the above.

The blue light found in the case of the silver nanowires was viewed along the electrical flux line, and this is consistent with a case where the silver nanowires are aligned and plasmolyzed in a direction of the electrical flux line due to electrostatic induction. The fact that no notable red component due to H-alpha line found in typical in-liquid plasma is found in this light emission suggests that mixture of water into plasma is less at this time and nanostructures are intensively heated.

In contrast, the white light derived from the carbon nanotubes are rather found to have a shape similar to a typical electrical spark. Such a white light emission color is consistent with the light emission color of carbon plasma found with a carbon arc lamp or the like, and it is still inferred that the nano-sized plasma emits light specific to the constituent substances thereof. Further, since light emissions having less common feature in terms of the color, the light emission range, or the like were observed for different nanostructures, it is believed that these light emissions are not caused by light emissions of some substances (water, hydrogen or oxygen produced by decomposition, or the like) other than the nanostructures but caused by light emissions of the plasma itself derived from the nanostructures.

The effects and advantages of the present embodiment described above are as follows.

When a pair of electrodes are powered from a power supply and a potential difference is provided between the pair of electrodes, at least one electroconductive path is formed from one electrode to the other electrode in a plurality of nanostructured materials dispersed in a liquid. Since the distance between the electrodes is about 1 cm and the potential difference is about 100 kV, sufficient energy to generate plasma is provided to the formed electroconductive path. This enables the electroconductive path formed by the nanostructured material to form plasma filaments and generate plasma. Accordingly, a high temperature of about 10⁸ K can be achieved. Further, since deuterium is contained in the medium, this can be used as fuel for nuclear fusion reactions and thus can generate a nuclear fusion reaction.

Note that, although the present invention has been described as the nuclear fusion reaction generating device or the nuclear fusion reaction generating method in the embodiment and Examples described above, the present invention can also be used as a plasma generating device or a plasma generating method.

Further, although the carbon nanotube 4 has been described as having a diameter of 10 nm, any carbon nanotube may be employed as long as the diameter thereof is in a range of 1 nm or greater and 100 nm or less and the length thereof is in a range of 0.5 mm or greater and 100 mm or less.

Although the distance between the electrodes 3, 3 has been described as being 1 cm, any distance may be employed as long as it is in a range of 1 mm or greater and 100 mm or less.

Although the potential difference between the electrodes 3, 3 has been described as being 100 kV, any potential difference may be employed as long as it is in a range of 10 kV or greater and 1000 kV or less and results in a degree of electric field intensity that does not cause overall dielectric breakdown along with the distance between the electrodes.

### [Reference Signs List]

- 1: nuclear fusion reaction generating device
- 2: liquid (medium)
- 3: electrode
- 4: carbon nanotube
- 5: power supply
- 6: switch
- 11: experimental device
- 13: needle electrode
- 14: dispersion liquid
- 15: power supply
- 16: switch

## Claims

1. A nuclear fusion reaction generating device comprising:
at least one pair of electrodes configured to provide a potential difference to an insulating medium containing nuclear fusion fuel;
a power supply connected to the pair of electrodes; and
a plurality of electroconductive nanostructured materials dispersed in the medium,
wherein each of the nanostructured materials has a diameter of 1 nm or greater and 100 nm or less and a length of 0.5 mm or greater and 100 mm or less,
wherein the distance between the electrodes is 1 mm or greater and 100 mm or less, and
wherein the potential difference is 10 kV or greater and 1000 kV or less.

2. The nuclear fusion reaction generating device according to claim 1, wherein each of the nanostructured materials has an elongated shape having an end.

3. A plasma generating device comprising:
at least one pair of electrodes configured to provide a potential difference to an insulating medium;
a power supply connected to the pair of electrodes; and
a plurality of electroconductive nanostructured materials dispersed in the medium,
wherein each of the nanostructured materials has a diameter of 1 nm or greater and 100 nm or less and a length of 0.5 mm or greater and 100 mm or less,
wherein the distance between the electrodes is 1 mm or greater and 100 mm or less, and
wherein the potential difference is 10 kV or greater and 1000 kV or less.

4. The plasma generating device according to claim 3, wherein each of the nanostructured materials has an elongated shape having an end.

5. A nuclear fusion reaction generating method performed by using
at least one pair of electrodes configured to provide a potential difference to an insulating medium containing nuclear fusion fuel,
a power supply connected to the pair of electrodes, and
a plurality of electroconductive nanostructured materials dispersed in the medium,
wherein each of the nanostructured materials has a diameter of 1 nm or greater and 100 nm or less and a length of 0.5 mm or greater and 100 mm or less,
wherein the distance between the electrodes is 1 mm or greater and 100 mm or less, and
wherein the potential difference is 10 kV or greater and 1000 kV or less.

6. The nuclear fusion reaction generating method according to claim 5, wherein each of the nanostructured materials has an elongated shape having an end.

7. A plasma generating method performed by using
at least one pair of electrodes configured to provide a potential difference to an insulating medium,
a power supply connected to the pair of electrodes, and
a plurality of electroconductive nanostructured materials dispersed in the medium,
wherein each of the nanostructured materials has a diameter of 1 nm or greater and 100 nm or less and a length of 0.5 mm or greater and 100 mm or less,
wherein the distance between the electrodes is 1 mm or greater and 100 mm or less, and
wherein the potential difference is 10 kV or greater and 1000 kV or less.

8. The plasma generating method according to claim 7, wherein each of the nanostructured materials has an elongated shape having an end.
